(19) Europäisches Patentamt
European Patent Office
Office européen des brevets

(11) Numéro de publication: **0 230 802 B1**

# (12) FASCICULE DE BREVET EUROPEEN

(45) Date de publication du fascicule du brevet: **27.06.90**

(51) Int. Cl.[5]: **C03C 17/32**, C08F 292/00

(21) Numéro de dépôt: **86402634.9**

(22) Date de dépôt: **27.11.86**

## (54) Procédé de greffage de composés organiques non saturés sur des produits verriers.

(30) Priorité: **28.11.85 FR 8517578**

(43) Date de publication de la demande:
**05.08.87 Bulletin 87/32**

(45) Mention de la délivrance du brevet:
**27.06.90 Bulletin 90/26**

(84) Etats contractants désignés:
**AT BE CH DE ES FR GB GR IT LI LU NL SE**

(56) Documents cités:
**DE-A-2 818 547**
**FR-A-2 202 904**
**GB-A-1 138 065**
**GB-A-1 456 865**

(73) Titulaire: **SAINT-GOBAIN RECHERCHE, 39 quai Lucien Lefranc, F-93300 Aubervilliers(FR)**

(72) Inventeur: **Chatelin, Roger, 36, allée des Monts d'Or Domaine de Bois Dieu, Lissieu F-69380 Lozanne(FR)**
Inventeur: **Gavet, Louis, 110, rue du Docteur Locard, F-69005 Lyon(FR)**

(74) Mandataire: **Breton, Jean-Claude, SAINT-GOBAIN RECHERCHE 39, quai Lucien Lefranc, F-93300 Aubervilliers Cedex(FR)**

EP 0 230 802 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un procédé de greffage de substances monomères à la surface de produits verriers.

Le greffage de composés organiques à la suface de produits verriers permet d'améliorer leurs caractéristiques ou celles des matériaux composites lorsque lesdits produits sont associés à une autre matrice. Ainsi, par exemple, il est bien connu que les proporiétés mécaniques, électriques et chimiques des matériaux composites renforcés de fibres de verre sont d'autant meilleures que la cohésion entre les fibres et la matrice est plus grande. L'un des moyens d'obtenir cette forte cohésion est d'utiliser des fibres sur lequelles ont été auparavant greffés des monomères insaturés, susceptibles de réagir avec les constituants de la matrice à renforcer.

Différents procédés de greffage des monomères ont déjà été préconisés mais ils commençent en général par un traitement de la fibre.

Ainsi, il est connu de soumettre la fibre à un flux d'électrons accélérés mais ce traitement n'est pas toujours approprié. En effet il semblerait que, lorsque la fibre est au préalable recouverte d'un silane, le rayonnement engendre des espèces radicalaires à durée de vie brève ou encore non labiles aux températures auxquelles est soumise la fibre dans la solution de monomère. Il n'est pas impossible non plus que les électrons accélérés provoquent une coupure des silanes au niveau de l'atome de silicium avec pour conséquence leur entrainement dans les réactifs de greffage.

Il est également connu de soumettre la fibre à l'action conjuguée de l'eau et de la température, puis de la placer sous vide afin d'éliminer l'oygène et, finalement, de la mettre en contact avec une solution ou un mélange de monomères contenant au moins un catalyseur. Ce dernier, par exemple un peroxyde, a pour effet de déclencher la réaction d'homopolymérisation ou de copolymérisation entre la surface de la fibre et le polymère. La longueur de la durée de certaines opérations limite l'intérêt d'un tel procédé.

Les remarques précédentes au sujet de la fibre de verre valent également pour les autres produits verriers tels que les microbilles ou microsphères, les emballages de verre, les vitrages destinés au bâtiment aussi bien qu'à l'industrie automobile.

L'invention a pour objet un procédé de greffage adapté aux produits verriers revêtus de silane.

L'invention a également pour objet un procédé dont les différentes phases se succèdent en un espace de temps assez limité.

Ces buts sont obtenus grâce à un procédé qui consiste à recouvrir le produit verrier d'au moins un silane possédant une double liaison éthylénique, à placer ledit produit dans une atmosphère formée d'un mélange d'ozone et d'oxygène dont la température demeure inférieure à 100°C, puis à le mettre en contact avec une solution, une émulsion ou une suspension de monomère non saturé, portée initialement à une température supérieure à 60°C.

Le silane est déposé sur le produit verrier généralement par le biais d'une solution aqueuse. La concentration en silane de cette solution, exprimée en pourcentages pondéraux, est comprise de préférence entre 0,5 % et 5 %.

L'application du silane sur le produit verrier peut se faire par tout moyen, par exemple en pulvérisant sur sa surface une solution aqueuse dudit silane ou en immergeant le produit dans ladite solution. Ainsi, dans le cas de la fibre de verre, il est possible de pulvériser la solution sur un matelas de fibres discontinues, ou de plonger dans ladite solution un enroulement de fils continus.

Pour les fils continus, il est toutefois préférable de déposer le silane sur les fibres lors de leur formation par étirage mécanique des filets de verre fondu s'écoulant des orifices d'une filière. Ceci est réalisé par l'intermédiaire d'un organe ensimeur, connu en soi, disposé sur le trajet des fibres de verre en cours d'étirage. Ce moyen permet de réaliser simultanément l'étirage des fibres et le dépôt de silane sur celles-ci. De plus, les fibres réunies sous forme d'un fil continu sont ainsi recouvertes régulièrement sur toute leur longueur par la solution aqueuse de silane.

Les produits verriers ainsi revêtus de silane sont alors disposés dans une enceinte dont on peut régler la température que restera inférieure à 100°C.

Le réglage de la température de l'enceinte étant effectué, celle-ci est balayée par un mélange gazeux formé d'oxygène et d'ozone. L'ozone est préalablement obtenu en soumettant un courant d'oxygène à l'action d'une effluve électrique à l'aide de ozoniseur classique.

Au contact de l'ozone le silane réagit pour former un ozonide et vraisemblablement d'autres composés tels que des peroxydes et hydroperoxydes. Cette réaction est fondée sur le mécanisme, étudié depuis longtemps, de l'addition de l'ozone sur les composés non saturés comme les composés éthyléniques.

Les produits verriers ainsi traités sont ensuite transférés dans un liquide contenant la substance à greffer. Ce peut être une solution, par exemple une solution aqueuse d'acide acrylique ou une émulsion, par exemple une émulsion de styrène dans l'eau. Le temps de séjour des produits dans ce liquide peut être de plusieurs heures.

Pour que la quantité de composé organique greffée soit relativement importante et bien répartie sur la surface, il est important de respecter certaines conditions :

- Ainsi, il est nécessaire de choisir un silane ayant une bonne affinité avec la surface du verre. Ces silanes sont bien connus de l'homme de métier chargé de réaliser, par exemple, des formulations d'ensimages destinés à revêtir les fibres de verre.

- Il est important que le silane soit réparti le plus régulièrement possible sur la surface du produit verrier.
- Il faut que l'intervalle de temps séparant la fin du traitement d'ozonisation et l'immersion dans le liquide contenant la substance à greffer soit le plus court possible. D'une manière générale cet intervalle est, de préférence, inférieur à 30 minutes.
- La concentration de la substance à greffer dans le liquide de traitement est de préférence supérieure à 10 % en poids.
- Lorsque le produit verrier est mis en contact avec le liquide de traitement, la température de ce dernier doit être suffisante pour provoquer la décomposition des composés oxygénés formés à l'issue de l'ozonisation desdits produits et déclencher la réaction de greffage. Cette réaction peut ensuite se poursuivre à des températures plus basses. La température initiale du liquide de traitement est, de préférence, supérieure à 60°C et, de préférence, inférieure à 100°C.

Il est avantageux d'ajouter au liquide de traitement un agent inhibiteur d'homopolymérisation tel que décrit dans la demande brevet déposée en France, le 28 novembre 1985, sous le numéro 8 517 612 au nom de l'INSTITUT TEXTILE DE FRANCE et intitulée : "Agent inhibiteur d'homopolymérisation pour réaction radicalaire de greffage". Cet agent inhibiteur doit éviter la polymérisation du monomère sur lui-même sans entraver pour autant la réaction de greffage.

Cet agent comporte donc une fonction qui le rend compatible avec le milieu de greffage, par exemple sulfonique ou carboxylique, et une fonction inhibitrice, par exemple une fonction insaturée du type allylique ou cyclique.

Le procédé selon l'invention sera mieux explicité grâce à des opérations de greffage effectuées à titre d'exemples sur des fibres de verre. La quantité de substance greffée a été chiffrée par un taux de greffage mesuré comme suit :

Un échantillon de fibres greffées est prélevé, rinçé à l'eau distillée et traité de manière à éliminer de la surface des fibres les produits n'ayant pas réagi. Après séchage en étuve, les fibres sont pesées. Si $P_o$ est la masse d'un échantillon de fibres de verre avant l'opération de greffage et $P_g$ la masse dudit échantillon après greffage, le taux de greffage $T_g$ est obtenu par la relation suivante :

$$T_g = \frac{P_g - P_o}{P_g} \times 100$$

Un certain nombre d'essais ont été réalisés sur des fibres de verre obtenues à partir de deux verres différents.

Le premier verre (I), bien connu sous le nom de verre E dans l'industrie de la fibre de verre de renforcement et défini notamment par les brevets américains US-A-2 334 961 et US-A-2 571 074, a sensiblement la composition pondérale suivante :
$SiO_2$ = 54,5 % ; $Al_2O_3$ = 14,5 % ; CaO = 17,5 % ; MgO = 4 % ; $B_2O_3$ = 8 %.

Le second verre (II) utilisé dans l'industrie de la fibre de verre destinée en particulier à l'isolation thermique, correspond sensiblement à la composition pondérale suivante :
$SiO_2$ = 64 % ; $Al_2O_3$ = 3,5 % ; CaO = 7 %; MgO = 3 % ; $Na_2O + K_2O$ = 16,5 % ; $B_2O_3$ = 5,5 %.

PREMIERE SERIE D'ESSAIS.

Ces essais ont été réalisés sur des fibres de verre continues obtenues par étirage mécanique du verre I. Au cours de leur étirage, ces fibres ont été revêtues d'un silane en solution aqueuse, répondant à la formule suivante :

```
CH2 = C - C - O - (CH2)3 - Si (OCH3)3
      |   ||
     CH3  O
```

La solution aqueuse utilisée contient environ 5 % de ce silane. La quantité de silane déposé sur les fibres est de l'ordre de 0,5 à 1,5 % en poids.

Les fibres de verre ainsi traitées, qui se présentent sous forme d'enroulements, sont disposées dans une enceinte dont la température est réglée à 50°C. Dès que cette température est atteinte, les fibres sont balayées par le mélange d'oxygène et d'ozone et ceci pendant une heure.

Ces conditions de traitement sont communes aux différentes fibres de verre qui sont ultérieurement soumises à l'action de solutions aqueuses d'acide acrylique. Les conditions de greffage et les résultats obtenus figurent dans le tableau 1 en annexe.

Outre l'acide acrylique, toutes les solutions contiennent 0,1 % de méthallylsulfonate de sodium (MTAS) comme inhibiteur d'homopolymérisation, hormis les solutions marquées d'un astérisque qui en contiennent 0,2 %.

Le taux de greffage est maximum lorsque la température initiale des solutions est égale à 80°C et pratiquement nul à des températures initiales inférieures ou égales à 60°C.

DEUXIEME SERIE D'ESSAIS.

A titre de contre-essais des fibres de verre I sont revêtues dans les mêmes conditions d'un silane saturé en solution aqueuse dont la formule est la suivante :

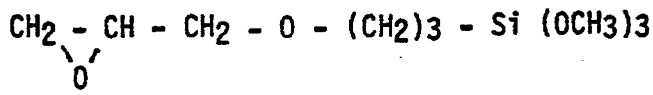

La solution aqueuse utilisée contient environ 5 % de silane. La quantité de silane déposé sur les fibres est de l'ordre de 0,5 à 5 % en poids.

Selon les essais, la température de l'enceinte pendant l'ozonisation est de 20°C ou de 50°C. La phase d'ozonisation dure une heure pour tous les essais. Les fibres sont ensuite soumises à l'action de différentes solutions aqueuses d'acide acrylique, qui contiennent toutes 0,1 % de MTAS. Les résultats obtenus sont consignés dans le tableau 2 figurant en annexe.

Quelles que soient les conditions choisies, le taux de greffage est toujours nul, ce qui démontre l'inefficacité d'un silane saturé dans le cadre de l'invention.

TROISIEME SERIE D'ESSAIS.

Ces essais sont réalisés sur des fibres de verre discontinues obtenues par centrifugation du verre fondu et étirage par fluide. La composition utilisée est celle du verre II.

Le silane employé est le même que celui de la première série d'essais. La solution aqueuse contient environ 5 % de silane. Elle est déposée sur les fibres, qui se présentent sous forme d'un feutre, par pulvérisation. La quantité de silane ainsi déposée est en moyenne de l'ordre de 6 % en poids.

Les fibres sont ozonisées à différentes températures pendant une heure. Elles sont ensuite soumises à l'action d'une solution aqueuse contenant 15 % d'acide acrylique et 0,2 % de MTAS pendant une heure et demie. La température de cette solution est de 80°C. Les résultats obtenus sont rassemblés dans le tableau 3 en annexe.

On constate que le taux de greffage est parfois relativement élevé mais qu'il varie considérablement d'un essai à l'autre à conditions apparemment égales. Ces résultats irréguliers sont vraisemblablement dus au mode de dépôt du silane et à la présentation des fibres qui peuvent être à l'origine de grandes variations quant aux quantités de silane effectivement déposées.

QUATRIEME SERIE D'ESSAIS

Ces essais sont réalisés sur des fibres de verre semblables à celles utilisées dans la série d'essais précédente.

Le silane employé est également le même.

La solution aqueuse utilisée contient environ 2 % de silane ; elle est déposée sur les fibres par pulvérisation. La quantité de silane ainsi déposée est en moyenne de l'ordre de 6 % en poids.

Les fibres de verre sont ozonisées à une température de l'ordre de 25°C pendant une heure. Elles sont ensuite plongées dans des solutions aqueuses de méthacrylamide renfermant toutes 2,5 % d'acide formique.

Au cours d'un premier essai, les fibres sont traitées dans une solution contenant 5 % de méthacrylamide portée à 80°C, pendant deux heures. Le taux de greffage obtenu est de 15,9 %.

Dans un deuxième essai, les fibres sont traitées dans une solution contenant 7 % de méthacrylamide, en observant les mêmes conditions de traitement. Le taux de greffage obtenu est de 30 %.

Lors d'un troisième essai, les fibres sont traitées dans une solution contenant 5 % de méthacrylamide portée à 70°C, pendant seize heures. Le taux de greffage obtenu atteint alors 34 %.

AUTRES ESSAIS.

Les différentes solutions et émulsions utilisées dans le cadre des essais indiqués ci-après contiennent toutes 0,1 % de MTAS.

Un premier essai est réalisé sur des fibres de verre du type II dans les mêmes conditons que la série

d'essais précédente. L'activation des fibres par l'ozone est faite à 25°C pendant une heure. Les fibres activées sont ensuite plongées dans une émulsion de styrène dans l'eau (concentration 10 %) portée à 80°C, pendant une heure et demie. Le taux de greffage obtenu est de 16 %.

Un deuxième essai est réalisé dans les mêmes conditions en changeant seulement la solution de greffage. Celle-ci est une solution aqueuse à 20 % de méthacrylate de diméthylaminoéthyle (MAD). Le taux de greffage obtenu est de 18 %.

Un troisième essai est réalisé dans les mêmes conditions, mais en utilisant un autre silane répondant à la formule suivante :

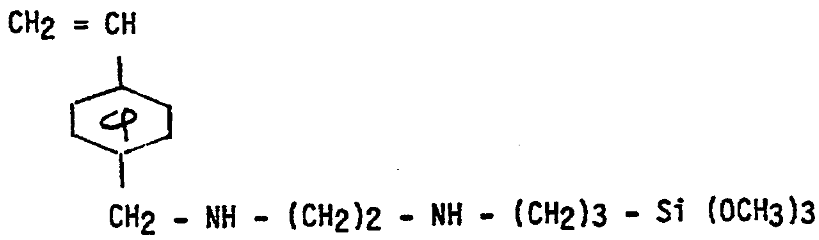

La solution aqueuse pulvérisée sur les fibres contient 2 % de ce silane ; le dépôt pondéral moyen de silane sur les fibres est d'environ 5 %. Les fibres ainsi traitées sont plongées dans une solution aqueuse à 15 % d'acide acrylique, portée à 80°C pendant une heure et demie. Le taux de greffage mesuré est de 11%.

Un quatrième essai est réalisé dans les mêmes conditions que l'essai précédent mais en utilisant une solution aqueuse à 20 % de MAD. Le taux de greffage mesuré est de 12 %.

Les fibres de verre, revêtues d'un silane non saturé puis activées par l'ozone, conservent une capacité de greffage non négligeable pendant un temps relativement long.

En effet, il a été observé que les fibres de verre, traitées dans les conditions de la troisième série d'essais (2ème ligne du tableau 2) et stockées sans précautions particulières (air ambiant, température ambiante) présentent un nombre de sites activés qui diminue lentement dans le temps. Ce phénomène se traduit par des taux de greffage de plus en plus faibles. Ainsi, avec une solution d'acide acrylique, $T_g$ qui est de 12 % après 30 minutes de stockage n'est plus que de 9 % au bout de 2 heures, de 5 % après 5 heures et devient nul au bout de 24 heures.

Les produits verriers greffés selon l'invention peuvent être utilisés dans le cadre de nombreuses applications : S'il s'agit de fibres, celles-ci peuvent être associées à des résines synthétiques, telles que des résines polyesters, pour réaliser des matériaux composites ; elles peuvent entrer dans la confection de supports utilisables en tant qu'échangeurs d'ions dans les techniques séparatives ; elles peuvent également servir de support de catalyseur, de molécules actives dans certaines réactions d'oxydoréduction, etc... S'il s'agit de vitrages ou d'emballages de verre, le greffage permet de réaliser une couche superficielle qui pourra jouer, par exemple, un rôle de protection (amélioration de la résistance au choc et à l'abrasion) ou un rôle de filtre à l'égard de certaines radiations.

Tableau 1

| Solution de greffage concentration du monomère | température (°C) | Tg (%) |
|---|---|---|
| 10 | 100 | 2,0 |
| 15 | 100 | 5,0 |
| 20 | 100 | 9,5 |
| 15 | 80 | 14,5 |
| 20 | 80 | 13,0 |
| *15 | 80 | 5,0 |
| *20 | 80 | 5,0 |
| *15 | 60 | 0 |
| *15 | 25 | 0 |

Tableau 2

| Température d'ozonisation (°C) | Solution de greffage concentration du monomère | température (°C) | Tg (%) |
|---|---|---|---|
| 20 | 20 | 100 | 0 |
| 50 | 10 | 100 | 0 |
| 50 | 15 | 100 | 0 |
| 50 | 20 | 100 | 0 |

Tableau 3

| Température d'ozonisation | Solution de greffage concentration du monomère | température (°C) | Tg (%) |
|---|---|---|---|
| 20 | 15 | 80 | 6,0 |
| 25 | 15 | 80 | 13,0 |
| 35 | 15 | 80 | 6,0 |
| 35 | 15 | 80 | 10,5 |
| 35 | 15 | 80 | 8 |
| 35 | 15 | 80 | 13 |

## Revendications

1. Procédé de greffage de composés organiques non saturés à la surface de produits verriers préalablement revêtus d'une solution contenant au moins un silane, caractérisé en ce qu'on applique sur les produits une solution comprenant au moins un silane possédant au moins une double liaison éthylénique, on place les produits ainsi revêtus dans une atmosphère formée d'un mélange d'ozone et d'oxygène, dont la température demeure inférieure à 100°C, puis on met en contact lesdits produits avec une solution, une émulsion ou une suspension de monomère non saturé, portée initialement à une température supérieure à 60°C.

2. Procédé selon la revendication 1, caractérisé en ce que la solution de silane est régulièrement déposée sur toute la surface des produits verriers.

3. Procédé selon l'une des revendications précédentes, caractérisé en ce que l'intervalle de temps séparant la sortie des produits de l'atmosphère d'ozone et leur mise en contact avec une solution, une émulsion ou une suspension de monomère est inférieur à 30 minutes.

4. Procédé selon l'une des revendications 1 à 3, caractérisé en ce que la concentration pondérale du monomère dans la solution, l'émulsion ou la suspension est supérieure à 10 %.

5. Procédé selon l'une des revendications 1 à 4, caractérisé en ce que la température initiale de la solution, de l'émulsion ou de la suspension est inférieure à 100°C.

6. Procédé selon l'une des revendications 1 à 5, caractérisé en ce que la solution, l'émulsion ou la suspension de monomère contient un inhibiteur d'homopolymérisation tel que le méthallylsulfonate de sodium.

7. Procédé selon l'une des revendications 1 à 6, caractérisé en ce que les produits sont mis en contact avec une solution aqueuse d'acide acrylique.

8. Procédé selon l'une des revendications 1 à 6, caractérisé en ce que les produits sont mis en contact avec une suspension de styrène dans l'eau.

9. Procédé selon l'une des revendications 1 à 6, caractérisé en ce que les produits sont mis en contact avec une solution aqueuse de méthacrylate de diméthylaminoéthyle.

10. Procédé selon l'une des revendications 1 à 9, caractérisé en ce que les produits verriers sont des fibres de verre, des microbilles, des microsphères, des vitrages ou des emballages de verre.

11. Application des fibres greffées selon le procédé défini par l'une des revendications 1 à 9 à la réalisation de supports utilisables en tant qu'échangeurs d'ions dans les techniques séparatives.

## Patentansprüche

1. Verfahren zum Pfropfen von ungesättigten organischen Zusammensetzungen auf die Oberfläche von Glasprodukten, welche zuvor von einer Lösung, die wenigstens ein Silan enthält überzogen wurden, dadurch gekennzeichnet, daß man auf die Produkte eine Lösung, die wenigstens ein Silan mit wenigstens einer ethylenischen Doppelbindung umfaßt, aufbringt, daß man schließlich die überzogenen Produkte in

eine Atmosphäre einbringt, die aus einer Mischung aus Ozon und Sauerstoff, deren Temperatur unterhalb von 100°C bleibt, gebildet ist, daß man dann die Produkte mit einer Lösung, einer Emulsion oder einer Suspension eines ungesättigten Monomeren, welches anfänglich auf eine Temperatur oberhalb von 60°C gebracht wurde, in Kontakt bringt.

2. Verfahren nach Anspruch 1, dadurch gekennzeichnet, daß die Silanlösung gleichmäßig auf der gesamten Oberfläche der Glasprodukte aufgebracht wird.

3. Verfahren nach einem der vorhergehenden Ansprüche, dadurch gekennzeichnet, daß das Zeitintervall, welches den Austritt der Produkte aus der Ozonatmosphäre und ihrem In-Kontakt-bringen mit einer Lösung, einer Emulsion oder einer Suspension des Monomeren trennt, unterhalb von 30 Minuten liegt.

4. Verfahren nach einem der Ansprüche 1 bis 3, dadurch gekennzeichnet, daß die Gewichtskonzentration des Monomeren in der Lösung, der Emulsion oder der Suspension oberhalb von 10% liegt.

5. Verfahren nach einem der Ansprüche 1 bis 4, dadurch gekennzeichnet, daß die Anfangstemperatur der Lösung, der Emulsion oder der Suspension unterhalb von 100°C liegt.

6. Verfahren nach einem der Ansprüche 1 bis 5, dadurch gekennzeichnet, daß die Lösung, die Emulsion oder die Suspension des Monomeren einen Homopolymerisationsinhibitor, wie beispielsweise Natriummethallylsulfonat, enthält.

7. Verfahren nach einem der Ansprüche 1 bis 6, dadurch gekennzeichnet, daß die Produkte mit einer wäßrigen Acrylsäurelösung in Kontakt gebracht werden.

8. Verfahren nach einem der Ansprüche 1 bis 6, dadurch gekennzeichnet, daß die Produkte mit einer Suspension von Styrol in Wasser in Kontakt gebracht werden.

9. Verfahren nach einem der Ansprüche 1 bis 6, dadurch gekennzeichnet, daß die Produkte mit einer wäßrigen Lösung von Dimethylaminoethylmethacrylat in Kontakt gebracht werden.

10. Verfahren nach einem der Ansprüche 1 bis 9, dadurch gekennzeichnet, daß die Glasprodukte Glasfasern, Glaskügelchen, Mikrokugeln, Glasscheiben oder Verpackungsmaterial aus Glas sind.

11. Verwendung der gepfropften Fasern nach dem durch die Ansprüche 1 bis 9 definierten Verfahren zur Herstellung von bei den Trenntechniken als Ionenaustauscher verwendbaren Trägermaterialien.

**Claims**

1. Process of grafting non-saturated organic compounds onto the surface of glass products previously coated with a solution containing at least one silane, characterised in that there is applied to the products a solution comprising at least one silane having at least one double ethylene bond, the products thus coated being placed in an atmosphere consisting of a mixture of ozone and oxygen, the temperature of which stays lower than 100°C, then the said products being placed in contact with a non-saturated monomer solution, emulsion or suspension, which is initially heated to a temperature above 60°C.

2. Process as claimed in claim 1, characterised in that the silane solution is deposited in a regular manner on the entire surface of the glass products.

3. Process as claimed in one of the preceding claims, characterised in that the interval between the time when the products leave the ozone atmosphere and when they come into contact with a monomer solution, emulsion or suspension is less than 30 minutes.

4. Process as claimed in one of claims 1 to 3, characterised in that the concentration by weight of the monomer in the solution, emulsion or suspension is more than 10%.

5. Process as claimed in one of claims 1 to 4, characterised in that the initial temperature of the solution, emulsion or suspension is less than 100°C.

6. Process as claimed in one of claims 1 to 5, characterised in that the monomer solution, emulsion or suspension contains a homopolymerisation inhibitor such as sodium methallylsulphonate.

7. Process as claimed in one of claims 1 to 6, characterised in that the products are placed in contact with an aqueous solution of acrylic acid.

8. Process as claimed in one of claims 1 to 6, characterised in that the products are placed in contact with a suspension of styrene in water.

9. Process as claimed in one of claims 1 to 6, characterised in that the products are placed in contact with an aqueous solution of dimethylaminoethyl methacrylate.

10. Process as claimed in one of claims 1 to 9, characterised in that the glass products are glass fibres, micro-balls, micro-spheres, glass panels or glass packaging.

11. Application of fibres grafted in accordance with the process defined by one of claims 1 to 9 in the production of supports used as ion exchangers in separating techniques.